# FASCICULE DE BREVET EUROPEEN

(11) **EP 1 914 142 B1**
(45) Date de publication et mention de la délivrance du brevet: **11.01.2012**
(21) Numéro de dépôt: 07290672.0
(22) Date de dépôt: 29.05.2007
(51) Int. Cl.: B61D 17/10

(54) **Ensemble structurel d'extrémité de caisse de voiture ferroviaire**
Endstruktureinheit des Wagenkastens eines Schienenfahrzeugs
Structural assembly for the end of a railway vehicle body

(30) Priorité: 02.06.2006 FR 0604956
(43) Date de publication de la demande: 23.04.2008
(73) Titulaire: ALSTOM Transport SA, 92300 Levallois-Perret (FR)
(72) Inventeur: Campus, Emigliano, 17340 Yves (FR)
(74) Mandataire: Habasque, Etienne J. Jean-François

(56) Documents cités:
- EP-A1- 0 667 271
- DE-A1- 19 819 927
- DE-U1- 20 112 340

## Description

La présente invention concerne le domaine des véhicules ferroviaires et plus précisément, les caisses de voitures de rames articulées, dans lesquelles une voiture de la rame est articulée à au moins une des voitures adjacentes, les deux voitures reposant sur un bogie de support commun, cf. par ex. DE-A1-198 19927.

La caisse d'une voiture ferroviaire articulée se compose généralement d'un châssis, d'un pavillon, de deux faces latérales et de deux ensembles structurels d'extrémité de caisse. Chaque face latérale s'étend entre un bord longitudinal du châssis et un bord longitudinal du pavillon. Le châssis, le pavillon et les faces latérales forment une cellule tubulaire. Chaque ensemble structurel d'extrémité de caisse est disposé à une extrémité longitudinale de la caisse de façon à la fermer partiellement ou complètement.

Il est souhaitable de réaliser des caisses de voiture ferroviaire de transport de voyageurs aptes à résister à des efforts importants, afin de pouvoir recevoir un nombre important de passagers, tout en limitant le poids de la caisse afin de respecter les limites de charge autorisées sur les essieux des bogies, et pouvant être fabriquées facilement et à faible coût.

A cet effet, l'invention propose un ensemble structurel d'extrémité de caisse de voiture ferroviaire, selon la revendication 1.

Selon d'autres modes de réalisation, l'invention comprend une ou plusieurs des caractéristiques des revendications 2 à 12, prise(s) isolément ou selon toutes les combinaisons techniquement possibles.

L'invention concerne également une caisse de voiture ferroviaire selon la revendication 13 et des rames selon les revendications 14 et 15.

L'invention et ses avantages seront mieux compris à la lecture de la description qui va suivre, donnée uniquement à titre d'exemple, et faite en se référant aux dessins annexés, sur lesquels :
- la figure 1 est une vue schématique en perspective éclatée d'une caisse de voiture ferroviaire, possédant deux ensembles structurels d'extrémité de caisse conformes à l'invention ;
- les figures 2 et 3 sont des vues schématiques en perspective respectivement éclatée et assemblée d'un des ensembles structurels d'extrémité de caisse conforme à l'invention ;
- les figures 4 et 5 sont des vues schématiques en perspective respectivement éclatée et assemblée de l'autre ensemble structurel d'extrémité de caisse conforme à l'invention ;
- la figure 6 est une vue en section longitudinale éclatée de deux ensembles structurels d'extrémité de caisse conformes à l'invention, articulés entre eux ;
- les figures 7 à 9 sont des vues analogues à celle de la figure 3, illustrant des ensembles structurels d'extrémité selon des variantes ; et
- les figures 10 et 11 sont des vues de côté, respectivement avant et après assemblage, de deux voitures d'une rame reliée par deux ensembles structurels d'extrémité de caisse complémentaires.

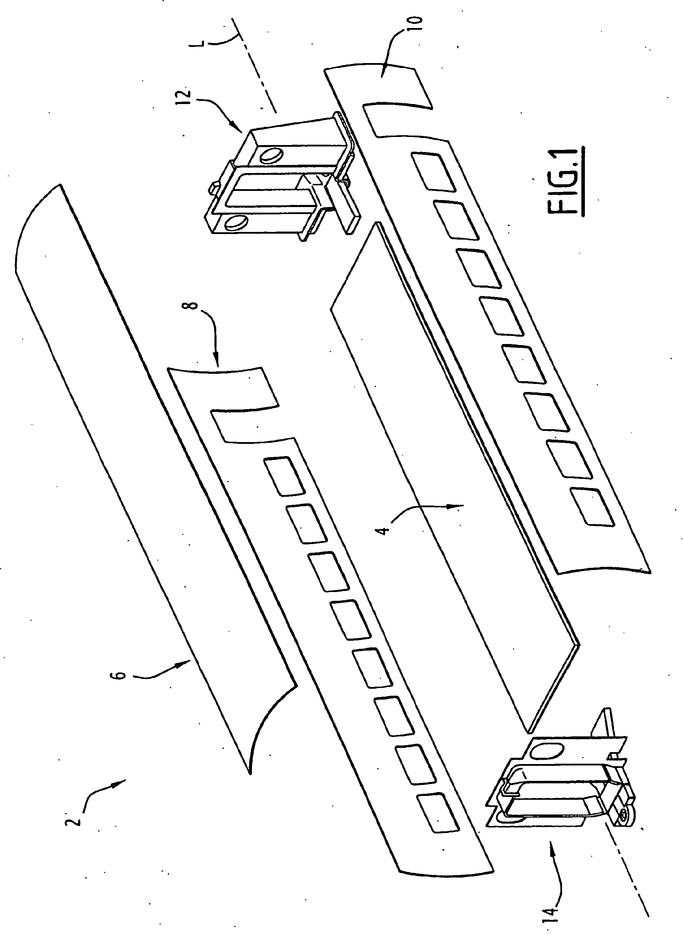

La figure 1 illustre une caisse 2 de voiture ferroviaire de voyageurs conforme à l'invention, s'étendant selon une direction longitudinale L.

La caisse 2 comprend un châssis de caisse 4, un pavillon 6, deux faces latérales 8, 10 et deux ensembles structurels 12, 14 d'extrémité de caisse. Ces éléments définissent la structure porteuse de la caisse 2, et participent donc chacun à la rigidité de la caisse 2.

Le châssis 4, le pavillon 6 et les faces latérales 8, 10 sont par exemple métalliques, et notamment réalisés en acier et /ou en aluminium.

Chacune des faces 8, 10 s'étend entre un bord longitudinal du châssis 4 et un bord longitudinal du pavillon 6. Le châssis 4, le pavillon 6 et les faces latérales 8, 10 forment une cellule tubulaire s'étendant selon la direction L.

Le châssis 4 est plus court que le pavillon 6 et les faces latérales 8, 10, et se termine à chacune des ses extrémités longitudinales à distance des extrémités longitudinales du pavillon 6 et des faces latérales 8, 10.

Chacun des ensembles structurels 12 et 14 est disposé à une extrémité longitudinale de la caisse de façon à la fermer à cette extrémité longitudinale.

Chacun des ensembles structurels 12 et 14 est fixé sur le châssis 4, le pavillon 6 et chacune des faces latérales 8 et 10, et participe à la rigidité de la caisse 2.

La caisse 2 est destinée à être articulée sur une autre caisse, les deux caisses étant en appui par leurs ensembles structurels d'extrémité de caisse adjacents sur un bogie commun aux deux caisses.

L'ensemble structurel 12 et l'ensemble structurel 14 sont différents, chacun de ces ensembles étant complémentaire de l'autre pour permettre leur articulation mutuelle lorsqu'il sont portés par deux caisses distinctes, en appui sur un bogie commun, et avec une intercirculation entre leurs caisses respectives.

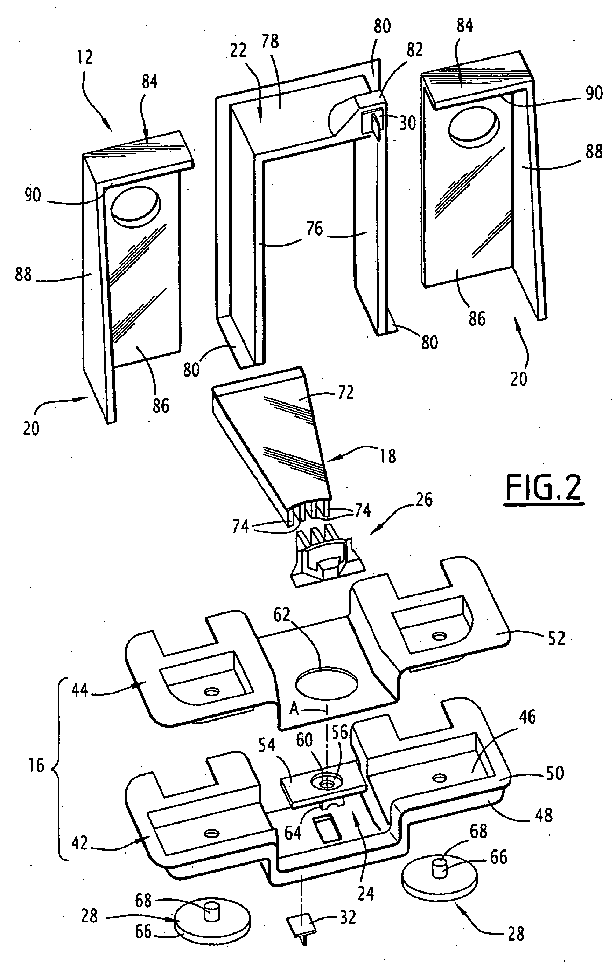

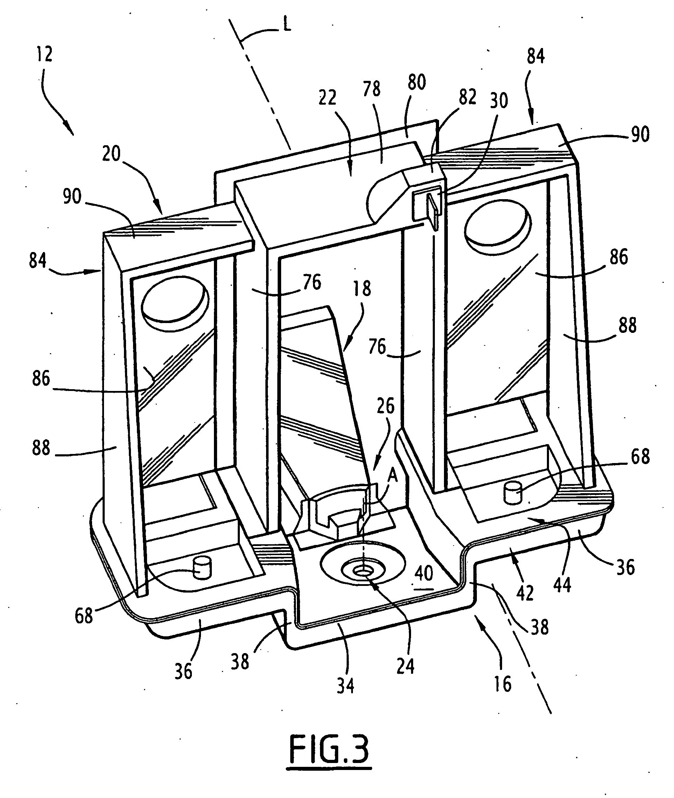

Tel que représenté sur les figures 2 et 3, l'ensemble structurel 12 est un ensemble structurel porteur.

L'ensemble structurel 12 comprend une traverse inférieure 16, une poutre longitudinale 18, une paroi de fermeture 20, et un tunnel d'intercirculation 22.

Ces différents éléments sont réalisés en matériaux composites, c'est-à-dire en matériaux à base de résine renforcée par des fibres, par exemple des fibres de verre, de carbone et/ou de Kevlar®.

L'ensemble structurel 12 comprend un organe d'articulation 24 (figure 2), un crochet d'attelage 26, des appuis de suspension 28 (figure 2), un support d'amortisseur anti-roulis 30 et un support d'amortisseur transversal 32 (figure 2).

Ces éléments sont réalisés sous la forme d'inserts métalliques, réalisés par exemple en acier et/ou aluminium, et fixés aux éléments en matériaux composites.

La traverse 16 s'étend sensiblement horizontalement et transversalement à la direction L.

Telle que représentée sur la figure 3, la traverse 16 comprend une portion centrale 34 et deux portions d'extrémité 36 latérales reliées à la portion centrale 34 par des décrochements 38, de façon que les portions d'extrémité 36 sont décalées vers le haut par rapport à la portion centrale 34. La traverse 16 présente donc un évidement central 40 (figure 3).

Comme cela est mieux visible sur la figure 2, la traverse 16 comprend une coque inférieure 42 et une coque supérieure 44 assemblées entre elles, conférant à la traverse 16 une structure en caisson. Les coques 42 et 44 sont en matériau composite.

La coque 42 présente une forme générale en cuvette ouverte vers le haut. La coque 42 possède un fond 46 et une paroi périphérique 48 s'étendant vers le haut à partir du fond 46, ladite paroi 48 possédant un rebord 50 en saillie vers l'extérieur.

La coque 44 est en contact par son bord périphérique 52 sur le rebord 50, sur lequel elle est fixée, par exemple par rivetage ou boulonnage.

L'organe d'articulation 24 est disposé à l'intérieur de la portion centrale 34 de la traverse 16, entre les coques 42, 44.

L'organe d'articulation 24 comprend un corps 54 possédant, sur une face supérieure, un évidement 56 cylindrique d'axe A vertical ouvert vers le haut, et un alésage 60 coaxial à l'évidement 56 et traversant le corps 54, à partir du fond de l'évidement 56.

La coque 44 est munie d'une ouverture circulaire 62 au droit de l'évidement 56.

L'organe d'articulation 24 possède des appuis 64 (un seul étant visible) disposés sur une face inférieure du corps 54. Les appui 64 sont destinés à venir en appui sur un pivot de traction (non représenté) d'un bogie. Chaque appui 64 est semi cylindrique d'axe parallèle à la direction L et ouvert vers le bas.

Les appuis 64 font saillie de la coque 42 vers le bas par une ouverture de celle-ci.

Les appuis de suspension 28 sont fixés sous les portions d'extrémité 36 de la traverse 16. Chaque appui 28 comprend un disque d'appui 66 disposé sous la portion d'extrémité 36 correspondante, et un embout 68 cylindrique traversant un trou de la traverse 16 et faisant saillie verticalement vers le haut sur la face supérieure de la traverse 16.

Chaque partie d'extrémité 36 est destinée à venir en appui par le disque 66 correspondant sur un dispositif de suspension (non représenté) apte à assurer la suspension verticale de l'ensemble structurel 12 sur un bogie portant cet ensemble structurel. Un dispositif de suspension est par exemple, de manière connue, une suspension à membrane pneumatique. L'embout 68 sert à relier le volume intérieur sous pression de la membrane à un circuit pneumatique (non représenté).

Le crochet 26 est destiné à assurer l'attelage de l'élément structurel 12 avec un ensemble structurel complémentaire.

Le crochet 26 est ouvert vers le haut et fixé sur la face supérieure de la partie centrale 34 de la traverse 16, en étant décalé longitudinalement par rapport à l'organe d'articulation 24.

La poutre 18 est fixée à une extrémité sur la portion centrale 34 de la traverse 16, et s'étend longitudinalement du côté de la caisse 2. Dans l'exemple illustré, la poutre 18 est fixée sur le crochet 26. La poutre 18 est destinée à être reliée, à son extrémité opposée, au châssis 4 de la caisse 2 (figure 1).

La poutre 18 est d'un seul tenant et formée par une plaque 72 munie sur sa face inférieure de nervures 74 longitudinales. La poutre 18 est fixée sur le crochet 26 et sur le châssis 4 par ses nervures 74.

Le tunnel 22 comprend deux montants 76 verticaux et une traverse supérieure 78 reliant les extrémités supérieurs des montants 76. Les montants 76 et la traverse supérieure 78 sont venus de matière.

Le tunnel 22 est muni d'un rebord 80 en saillie vers l'extérieur du tunnel 22, et s'étendant à la base de ses montants 76, et le long de ses montants 76 et de sa traverse supérieure 78. Le rebord 80 sert à fixer le tunnel 22 sur la face supérieure de la traverse 16 et sur le pavillon 6, par exemple par rivetage, boulonnage ou collage.

Les montants 76 et la traverse supérieure 78 délimitent un passage possédant une hauteur et une largeur suffisante pour permettre la circulation des passagers.

La traverse supérieure 78 est munie d'une extension 82 en saillie vers le haut sur laquelle est fixé le support 30. Le support 30 permet la fixation d'un amortisseur anti-roulis, tel qu'un amortisseur hydropneumatique, destiné à s'étendre sensiblement selon un axe transversal, et à être fixé à son extrémité opposée à un ensemble structurel d'extrémité de caisse complémentaire, pour limiter une rotation relative des élément structurels d'extrémité de caisse atour d'un axe longitudinal.

La paroi 20 comprend deux tabliers latéraux 84 situés latéralement de part et d'autre du tunnel 22.

Chaque tablier 84 possède un panneau 86 de fermeture de l'extrémité de la caisse 2, possédant un bord interne fixé sur la partie du rebord 80 s'étendant le long d'un montant 76, et un bord externe destiné à être fixé sur un des faces latérales 8, 10 (figure 1).

Chaque tablier 84 possède un montant 88 de renfort prolongeant le panneau 86 vers l'extérieur de la caisse à partir du bord externe de celui-ci, et une traverse 90 prolongeant le bord supérieur du panneau 88 vers l'extérieur de la caisse, et reliée à l'extrémité supérieure du montant 88. Le panneau 86, le montant 88 et la traverse 90 sont venus de matière.

Le montant 88 est fixé à sa base la face supérieure de la traverse 16, et la traverse 90 est fixée à son extrémité opposée au montant 88 sur le tunnel 22, par exemple par rivetage, boulonnage ou collage.

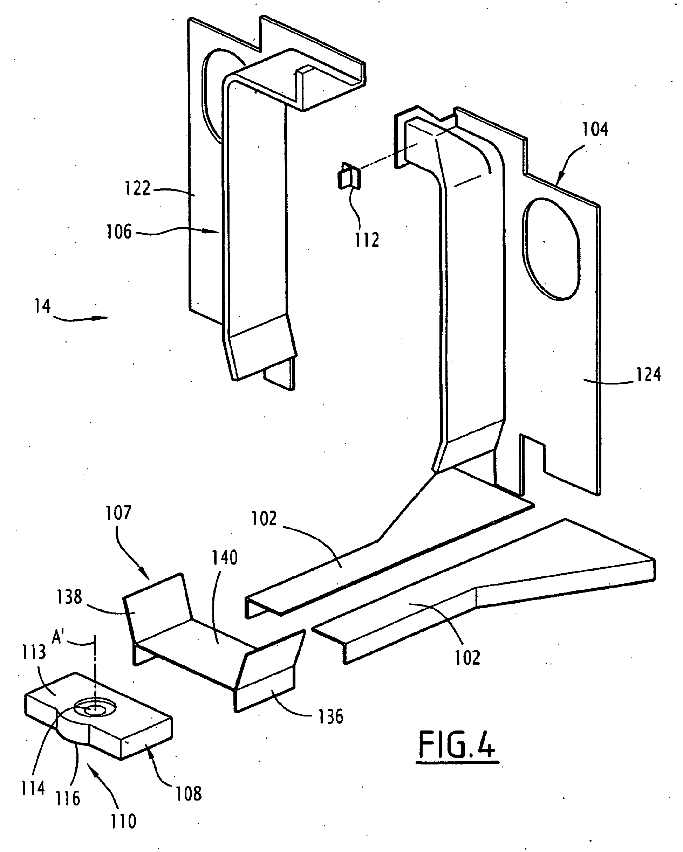

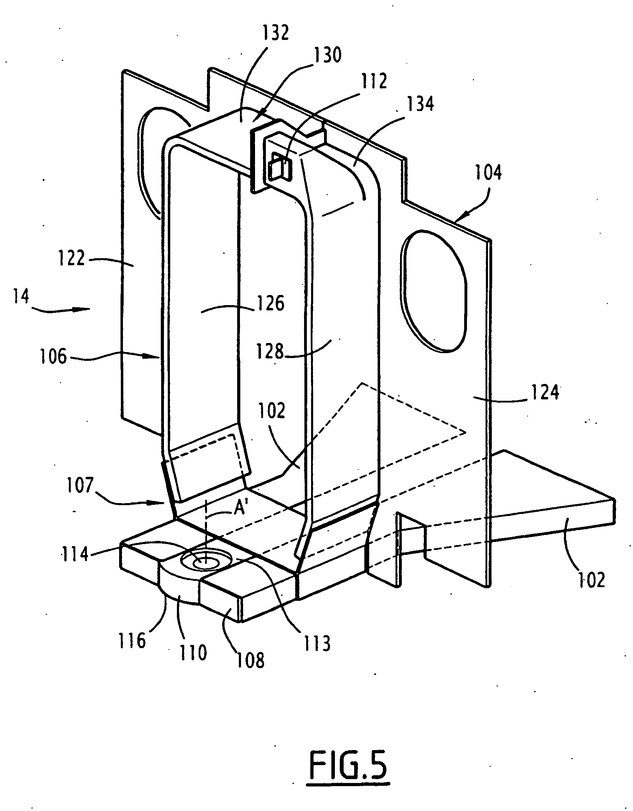

Tel que représenté sur les figures 4 et 5, l'ensemble structurel d'extrémité de caisse 14 comprend des poutres longitudinales 102, une paroi de fermeture 104, un tunnel d'intercirculation 106 et une embase 107.

Ces éléments sont réalisés en matériaux composites, c'est-à-dire en matériaux à base de résine renforcée par des fibres, par exemple des fibres de verre, de carbone et/ou de Kevlar®.

L'ensemble structurel 14 comprend un organe d'articulation 108, un organe d'attelage 110, et un support d'amortisseur anti-roulis 112.

Ces éléments sont réalisés sous la forme d'inserts métalliques, réalisés par exemple en acier et/ou aluminium.

L'organe d'articulation 108 comprend un corps 113 possédant un alésage 114 s'étendant selon un axe A' d'articulation et destiné à recevoir un pivot d'articulation (non représenté).

L'organe d'attelage 110 est venu de matière avec l'organe d'articulation 108, et se présente sous la forme d'une nervure d'attelage 116 s'étendant depuis le corps 113 vers le bas, et destinée à venir en prise avec un doigt d'un crochet d'attelage. La nervure 116 s'étend en arc de cercle autour de l'axe A' d'articulation.

Les poutres 102 sont, dans l'exemple illustré, au nombre de deux, et s'étendent longitudinalement. Chaque poutre 102 a une extrémité fixée sur l'organe d'articulation 108, et son extrémité opposée destinée à être fixée sur la châssis 4 de la caisse 2. En variante, les poutres 102 sont réalisées d'un seul tenant.

La paroi 104 est formée par deux tabliers 122, 124 s'étendant perpendiculairement à la direction longitudinale. Le tablier 122 est plus large que le tablier 124.

Le tunnel 106 comprend deux montants 126, 128 et une traverse supérieure 130 reliant les montants 126, 128 à leurs extrémités supérieures. La traverse 130 comprend deux tronçons 132, 134.

Le montant 126 et le tronçon 132 sont venus de matière avec le tablier 122. Le montant 128 et le tronçon 134 sont venus de matière avec le tablier 124.

Le tronçon 134 possède une extension en saillie vers le haut possédant un face sur laquelle est fixée le support 112.

Les bords externes et supérieurs des tabliers 122, 124 sont destinés à être fixés sur les faces latérales 8, 10 et le pavillon 6 de la caisse 2.

Les bases des montants 126 et 128 sont fixées sur les poutres 102 par l'embase 107. L'embase 107 possède une forme en H et comprend une première jambe 136 et une deuxième jambe 138 reliées par une liaison transversale 140. Chaque jambe 136, 138 a sa partie supérieure fixée sur la base du montant 126, 128 correspondant, et sa partie inférieure fixée sur la poutre 102 correspondante.

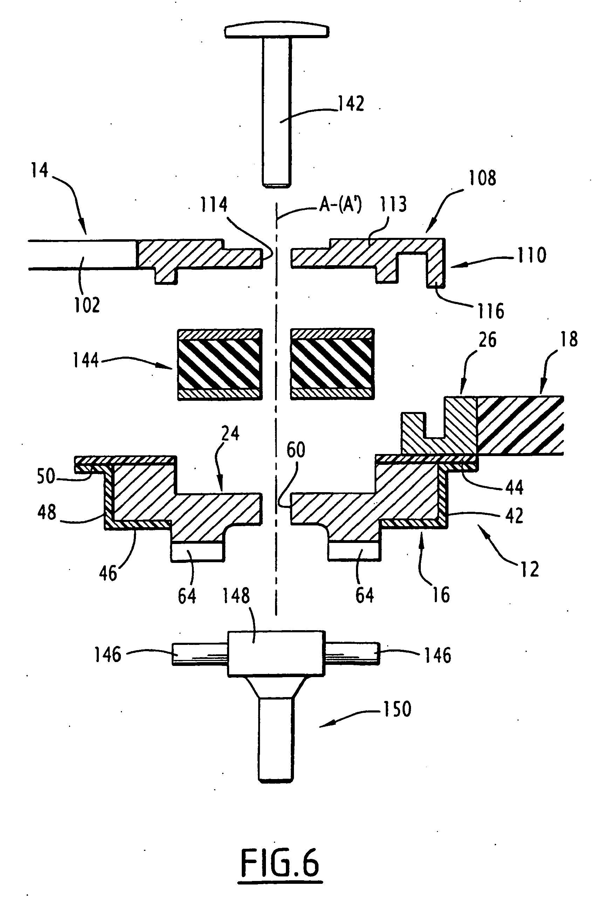

La figure 6 représente, en vue de côté, et en section longitudinale éclatée, un ensemble structurel 12 porteur et d'un ensemble structurel 14 porté articulés l'un sur l'autre, et en appui sur un bogie (non représenté).

Les ensembles structurels 12 et 14 sont disposés de façon que l'organe d'articulation 108 se situe au-dessus de l'organe d'articulation 24, leurs axes A et A' étant alignés.

Un pivot d'articulation 142 est inséré du haut vers le bas dans les alésages, de sorte que les ensembles structurels 12 et 14 sont mutuellement articulés autour de l'axe du pivot coïncidant avec les axes A et A'.

Après assemblage, les ensembles structurels 12 et 14 sont mutuellement attelés par la nervure d'attelage 116 insérée dans le crochet 26 et en prise avec celui-ci. Du fait que la nervure 116 s'étend en arc de cercle centré autour de l'axe A, la nervure 116 et le crochet 26 permettent la rotation relative des ensembles structurels 12 et 14 autour de l'axe A (A').

Une couronne de suspension 144 est interposée entre l'organe d'articulation 108 et l'organe d'articulation 24.

La couronne 144 comprend des inserts métalliques et des couches en matériau élastomère superposés et alternés.

A l'état assemblé, la couronne 144 est reçue dans l'évidement 56 à travers l'ouverture 62, et l'organe d'articulation 108 est en appui vertical, par l'intermédiaire de la couronne 144, sur l'organe d'articulation 24 formant support d'articulation. Ainsi, l'ensemble structurel 14 est supporté par l'ensemble structurel 12.

L'organe d'articulation 24 est en appui par ses appuis 64 sur des tourillons 146 faisant saillie d'une tête supérieure 148 d'un pivot vertical de traction 150 monté sur un châssis de bogie (non représenté). Les tourillons 146 sont diamétralement opposés et s'étendent perpendiculairement à l'axe du pivot 150.

Le pivot 150 est destiné à être fixé rigidement sur le châssis d'un bogie.

Les appuis 64 peuvent tourner autour des tourillons 146 pour permettre une prise de roulis de l'ensemble structurel 12 par rapport au bogie.

En fonctionnement, chacun des ensembles structurels 12 et 14 participe à la rigidité de la caisse 2. En particulier, les parois de ces ensembles structurels 12 et 14 contribuent à maintenir la section transversale de la caisse.

Chacun des ensembles structurel 12 et 14 assure le transfert de la charge de la caisse 2 sur un bogie, la liaison longitudinale avec ce bogie, et la liaison longitudinale et l'articulation avec une caisse adjacente.

Chacun des ensembles structurel 12 et 14 possède un tunnel d'intercirculation permettant aux passagers de passer de la voiture à une voiture adjacent. Lorsque deux éléments structurels sont articulés l'un sur l'autre, un soufflet d'intercirculation ou tout autre moyen pour assurer l'étanchéité de l'intercirculation, et protéger les passagers du bruit, relie leurs tunnels.

Dans chacun des ensembles structurels 12 et 14, la ou chaque poutre longitudinale assure la transmission des efforts longitudinaux entre les organes d'articulation et le châssis de la caisse.

La réalisation des éléments structurels, en matériaux composites, au moins en partie, permet de leur conférer une rigidité suffisante, tout en limitant leur poids.

La réduction du poids de la caisse permet d'augmenter le nombre de passager pouvant monter à bord de la caisse, tout en respectant les limites de charges autorisées sur les essieux des bogies supportant la caisse.

Les éléments structurels d'extrémité de caisse possèdent des dimensions réduites, en particulier en regard de celles du châssis, des faces latérales ou du pavillon. Il est donc plus facile et moins coûteux de réaliser ces ensemble structurels d'extrémité de caisse en matériaux composites, que de réaliser les autres éléments de la caisse en matériaux composites.

En outre, les éléments structurels d'extrémité de caisse représentent en général une part importante du poids total de la caisse.

Par conséquent, la réduction du poids de ces ensembles structurels d'extrémité de caisse, par l'emploi de matériaux composites, permet de réduire efficacement le poids total de la caisse, tout en limitant le surcoût engendré par l'emploi des matériaux composites.

Etant donné que les éléments structurels d'extrémité de caisses de voitures de rame articulée supportent le poids de la caisse et assurent en même temps la liaison longitudinale de la caisse avec une autre caisse et avec le bogie, ces éléments structurels d'extrémité de caisse supportent des contraintes très élevées.

Contrairement à ce que l'on pouvait craindre, il est possible d'obtenir des ensembles structurels d'extrémité de caisse au moins en partie en matériaux composites suffisamment résistants.

En particulier, la traverse inférieure en caisson obtenue par assemblage de deux coques est particulièrement rigide. En outre, l'ajout d'inserts métalliques à l'intérieur de la traverse permet de la renforcer. Ces inserts métalliques sont avantageusement prévus sous la forme d'un organe d'articulation de l'ensemble structurel d'extrémité de caisse sur un autre ensemble structurel d'extrémité de caisse d'une autre voiture.

Ainsi, de manière générale, l'invention concerne une traverse inférieure d'un ensemble structurel d'extrémité de caisse de voiture ferroviaire, comprenant deux coques en matériaux composite assemblées ente elles et formant une structure en caisson, et un organe d'articulation de l'ensemble structurel d'extrémité de caisse sur un ensemble correspondant, l'élément d'articulation étant métallique et inséré à l'intérieur de la traverse, entre les coques, de façon à renforcer la traverse.

Sur les figures 2 et 3, on a représenté des tabliers et des tunnels distincts. En variante, les tabliers et le tunnel sont réalisés d'un seul tenant et en matériaux composites.

Par ailleurs, la traverse, au lieu d'être formée par deux coques, est en variante formée d'un seul tenant. Dans ce cas, les inserts métalliques tels que l'organe d'articulation et les disques d'appuis sont fixés au-dessus ou au-dessous de la traverse.

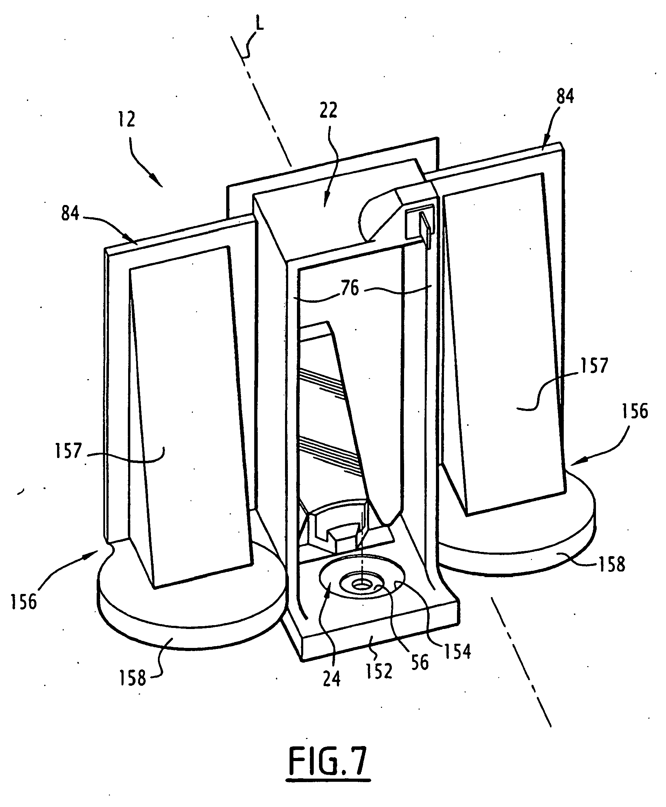

Des variantes d'ensembles structurels d'extrémité de caisse porteurs sont représentées sur les figures 7 à 9, sur lesquelles les références aux éléments semblables à ceux des figures 1 à 6 ont été conservées.

Tel que représenté, un ensemble structurel 12 diffère de celui des figures 2 et 3 principalement en ce qu'il ne comprend pas de traverse dont les portions d'extrémité sont destinée à venir en appui sur des membrane pneumatique de suspension.

Au lieu de cela, l'ensemble structurel 12 comprend un tunnel 22 de forme annulaire comprenant un berceau 152 reliant les extrémités inférieures des montants 76 du tunnel 22.

Le berceau 152 comprend une ouverture circulaire 154, et l'organe d'articulation 24 est fixé sous le berceau 152 de façon que l'évidement 56 se situe sous l'ouverture 154.

Pour s'appuyer sur des membranes pneumatique de suspension, l'ensemble structurel 12 comprend deux potences 156, chacune fixée sur un des tabliers 84.

Les potences 156 sont réalisées en matériaux composites.

Chaque potence 156 se présente sous la forme d'un pilier vertical 157 fixé contre le tablier 84 correspondant, s'élargissant du haut vers le bas dans le sens longitudinale de la caisse, et comprenant à sa base un pied 158 d'appui sur un dispositif de suspension.

Chaque pied 158 possède la forme d'un disque, et destiné à recevoir sous sa surface inférieure un disque d'appui (non représenté) sur une membrane pneumatique de suspension.

Ainsi, les efforts d'appui de l'ensemble 12 sur les dispositifs de suspension sont transmis vers les tabliers 84 par les potences 156.

Chaque potence 156 est rapportée sur le tablier 84 correspondant ou réalisée d'un seul tenant avec celui-ci, et chaque tablier 84 est rapporté sur le tunnel 22 ou réalisé d'un seul tenant avec celui-ci.

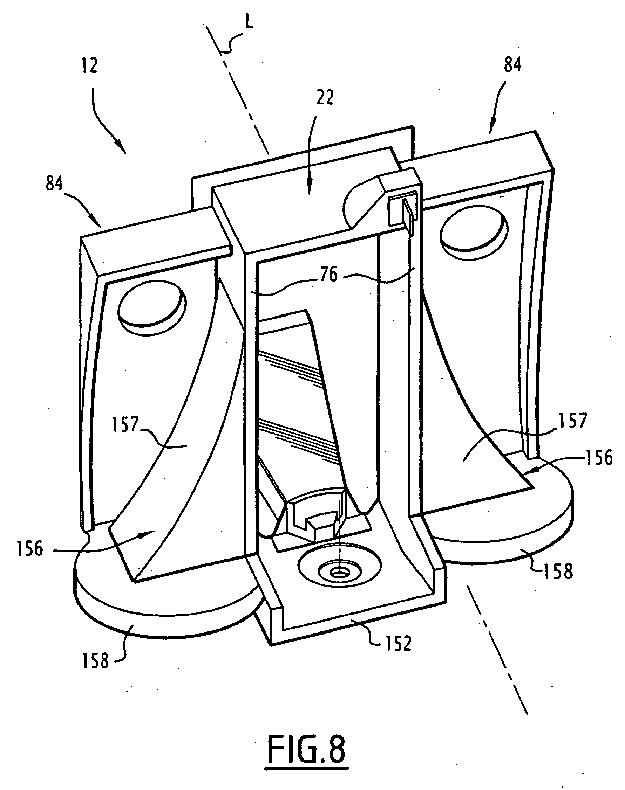

La variante de la figure 8 diffère de celle de la figure 7 en ce que les potences 156 s'étendent le long des montants 76 du tunnel 22, et s'élargissent dans le sens transversal de la caisse.

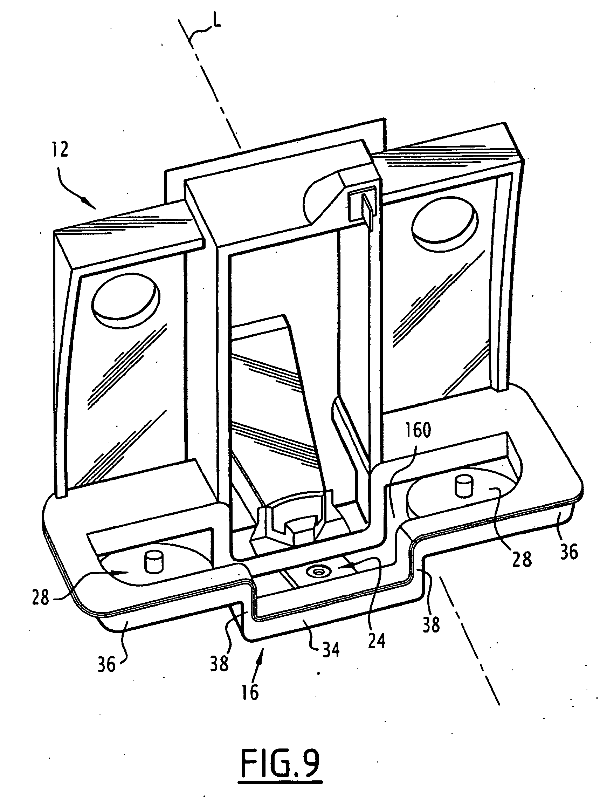

Le mode de réalisation de la figure 9 diffère de celui des figures 2 et 3 par la forme de sa traverse 16.

Telle que représentée sur la figure 9, la traverse 16 présente une structure annulaire, et possède une lumière 160 s'étendant le long de la traverse 16 dans les portions d'extrémité 36 et la portion centrale 34.

Les disques 28 et l'organe 24 sont fixés sous la traverse 16. La lumière 160 allège la traverse 16 sans l'affaiblir inconsidérément, et permet d'accéder par le dessus à l'organe 24 et aux disques 28.

On notera que les modes de réalisations intégrant une traverse (figure 2, 3 et 9) permettent d'élargir le tunnel d'intercirculation par rapport aux modes de réalisation possédant des potences. En outre, le gain masse/coût est plus important dans ces modes de réalisation du fait du poids plus réduites de la traverse par rapport aux potences, tout en conservant des caractéristiques mécaniques suffisantes. De plus, l'encombrement longitudinal de l'élément structurel porteur est plus réduit avec la traverse qu'avec les potences, ce qui réduit l'espacement entre les voitures adjacentes et permet de diminuer la longueur de la rame ou d'allonger chaque voiture tout en conservant une même longueur de rame.

La suppression des potences libère en outre de la place entre les caisses pour loger des équipements ou permettre le passage des câbles et des conduits (alimentation, communication...) entre les caisses.

La traverse inférieure regroupe avantageusement les moyens de liaison mécanique au bogie, tel que l'organe d'articulation. Ainsi, les aménagement nécessaires peuvent être effectué sur l'ensemble structurel d'extrémité de caisse porteur, avant sa fixation sur la caisse, ce qui facilite la réalisation de ces aménagements.

Ainsi, de manière générale, l'invention a pour objet un ensemble structurel d'extrémité de caisse de voiture ferroviaire, ladite caisse comprenant un châssis, un pavillon et des faces latérales, ledit ensemble structurel d'extrémité étant du type destiné à être disposé à une extrémité longitudinale de la caisse pour articuler la caisse sur une caisse d'une autre voiture adjacente et transférer la charge de la caisse sur un bogie de support commun à cette autre voiture, l'élément structurel d'extrémité de caisse comprenant une traverse inférieure possédant une portion centrale et deux portions latérale, la portion centrale étant prévue pour porter un organe d'articulation de la caisse sur une autre caisse, et chaque portion latérale étant adaptée pour venir en appui sur des dispositifs de suspension de la caisse sur un bogie, comme par exemple des membranes à suspension pneumatique.

L'invention a aussi pour objet une rame articulée possédant une voiture comprenant un ensemble structurel de ce type, en appui par les portions latérales de sa traverse inférieure sur des dispositifs de suspension.

Les avantages liés à l'utilisation d'une traverse prévue pour porter sur les suspensions au lieu de potences sont obtenus aussi bien avec une traverse métallique qu'avec une traverse réalisée en matériaux composites, d'un seul tenant ou par assemblage de coque pour forme une traverse à structure en caisson. La traverse en matériaux composites sera néanmoins plus légère.

La traverse inférieure est réalisée en acier, en aluminium, en alliage d'aluminium ou en composite.

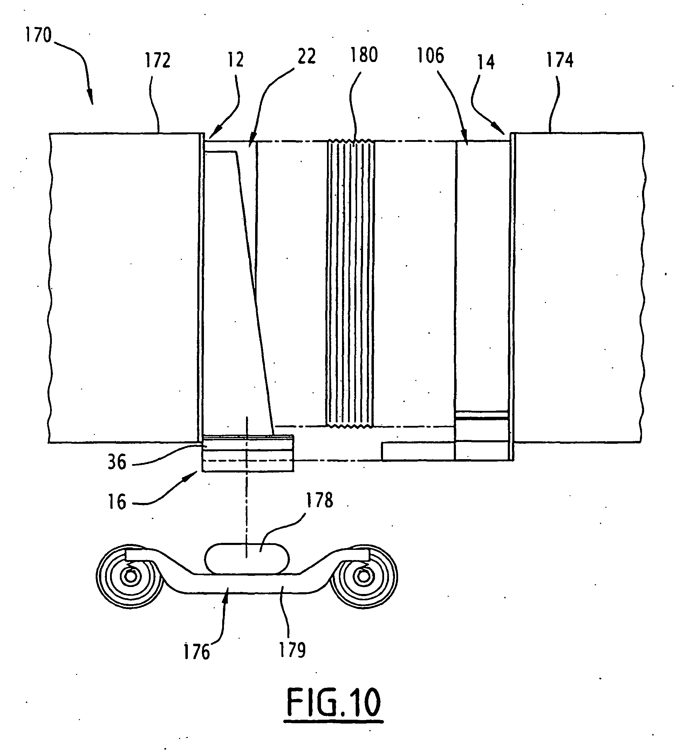

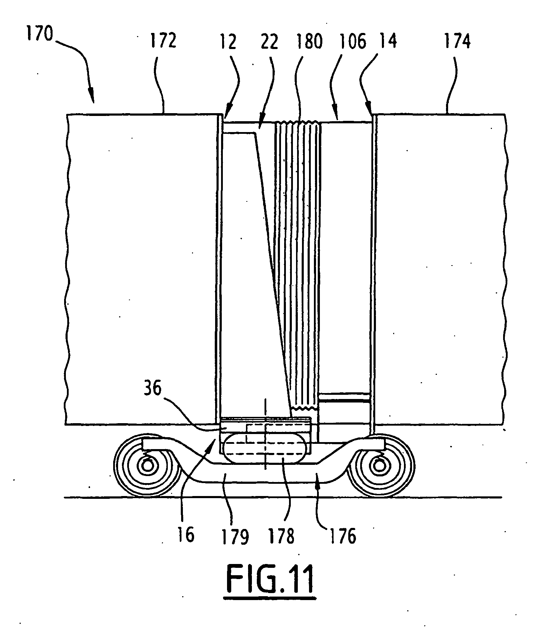

Tel que représentée sur les figures 10 et 11, une rame 170, composée d'une file de voitures, comprend une première voiture 172 et une deuxième voiture 174 adjacentes, et un bogie 176 commun aux deux voitures 172, 174.

Les voitures 172 et 174 sont montrées avant assemblage sur la figure 10.

La première voiture 172 possède un ensemble d'extrémité de caisse porteur 12, dont la traverse inférieure 16 est prévue pour être en appui par ses portions latérales 36 sur des dispositifs de suspension 178 interposés entre l'ensemble structurel 12 et un châssis 179 du bogie 176.

La deuxième voiture 174 possède un ensemble structurel d'extrémité de caisse porté 14 complémentaire de l'ensemble structurel d'extrémité de caisse porteur 12, prévu pour s'articuler et être en appui sur l'ensemble d'extrémité de caisse porteur 12.

Les voitures 172 et 174 sont représentées après assemblage sur la figure 11, où les ensembles d'extrémités de caisse 12 et 14 des voitures respectivement 172 et 174 sont articulés l'un sur l'autre. L'ensemble d'extrémités de caisse porté 14 est en appui sur l'ensemble d'extrémité de caisse porteur 12, et articulé par rapport à celui-ci autour d'un axe sensiblement vertical. Les ensembles structurels 12 et 14 sont reliés de la façon représentée sur la figure 6.

Un soufflet d'étanchéité 180 est disposé entre les extrémités libres des tunnels d'intercirculation 22, 106 des ensembles 12 et 14.

## Revendications

1. Ensemble structurel (12) d'extrémité de caisse de voiture ferroviaire, du type destiné à être fixé à une extrémité longitudinale d'une caisse (2) de voiture ferroviaire comprenant un châssis (4), un pavillon (6) et des faces latérales (8, 10) formant une cellule tubulaire, pour articuler la caisse (2) sur une caisse d'une autre voiture adjacente et transférer la charge de la caisse (2) sur un bogie de support de la caisse commun à cette autre voiture, comprenant une traverse inférieure (16) et un organe d'articulation (24) sur un autre ensemble structurel d'extrémité de caisse fixé sur ladite autre voiture adjacente,
**caractérisé en ce que** la traverse inférieure (16) possède une portion centrale (34) et deux portions latérales (36), l'organe d'articulation (24) étant fixé sur la portion centrale (34), et chaque portion latérale étant adaptée pour venir en appui sur des dispositifs de suspension de la caisse sur ledit bogie.

2. Ensemble selon la revendication 1, **caractérisé en ce que** la traverse inférieure (16) est réalisée au moins en partie en matériau composite.

3. Ensemble selon la revendication 1 ou 2, **caractérisé en ce que** la traverse inférieure (16) est réalisée d'un seul tenant:

4. Ensemble selon la revendication 1 ou 2, **caractérisé en ce que** la traverse inférieure (16) comprend une coque inférieure (42) et une coque supérieure (44) superposées conférant à la traverse une structure en caisson.

5. Ensemble selon l'une quelconque des revendications précédentes, **caractérisé en ce que** la traverse inférieure (16) comprend au-dessus de l'organe d'articulation (24) un évidement (40) de réception d'une couronne de suspension (144) destinée à être disposée verticalement entre l'organe d'articulation (24) et un organe d'articulation (108) correspondant dudit autre ensemble structurel d'extrémité de caisse.

6. Ensemble selon la revendication 5, **caractérisé en ce que** l'organe d'articulation (24) est au moins en partie reçu à l'intérieur de la traverse inférieure (16).

7. Ensemble selon la revendication 5 ou 6, **caractérisé en ce qu'**il comprend au moins une poutre longitudinale (18) de poussée fixée sur l'organe de liaison (24) ou la traverse inférieure (16) et destinée à s'étendre entre, l'organe d'articulation (24) et un châssis (4) de caisse de voiture ferroviaire, vers l'intérieur de la voiture.

8. Ensemble selon la revendication 7, **caractérisé en ce qu'**il comprend deux poutres longitudinales séparées.

9. Ensemble selon l'une quelconque des revendications précédentes, **caractérisé en ce qu'**il comprend au moins un organe d'attelage (26) avec ledit autre ensemble structurel d'extrémité de caisse de ladite autre voiture adjacente.

10. Ensemble selon l'une quelconque des revendications précédentes, **caractérisé en ce qu'**il comprend un tunnel (22) d'intercirculation permettant aux passagers de passer à travers l'ensemble structurel d'extrémité de caisse pour rejoindre une voiture adjacente.

11. Ensemble selon la revendication 10, **caractérisé en ce que** le tunnel (22) est réalisé en matériau composite.

12. Ensemble selon la revendication 11, **caractérisé en ce qu'**il comprend des tabliers (84) de fermeture, situés latéralement de part et d'autre du tunnel (22) et destinés à s'étendre transversalement pour fermer au moins partiellement l'extrémité longitudinale de la caisse.

13. Caisse de voiture ferroviaire comprenant un châssis de caisse (4), un pavillon (6), et deux faces latérales (8, 10) s'étendant chacune entre un bord longitudinal du pavillon (6) et un bord longitudinal du châssis de caisse (4), **caractérisée en ce qu'**elle comprend au moins un ensemble structurel (12) d'extrémité de caisse selon l'une quelconque des revendications précédentes, fixé à une extrémité longitudinale de la caisse.

14. Rame comprenant une première voiture et une deuxième voiture adjacentes possédant chacune une caisse incluant un châssis de caisse (4), un pavillon (6), et deux faces latérales (8, 10), et un bogie commun aux deux voitures, la première voiture (172) possédant un ensemble d'extrémité de caisse (12) porteur, selon l'une quelconque des revendications 1 à 12, fixé à une extrémité longitudinale de la caisse de la première voiture, et en appui sur des dispositifs de suspension interposés entre l'ensemble d'extrémité de caisse (12) porteur et le bogie, la deuxième voiture (174) possédant un ensemble structurel d'extrémité de caisse (14) porté fixé à une extrémité longitudinale de la caisse de la deuxième voiture, l'ensemble structurel d'extrémité de caisse (14) porté étant complémentaire dudit ensemble structurel d'extrémité de caisse (12) porteur, en appui sur l'ensemble d'extrémité de caisse (12) porteur, et articulé sur celui-ci.

15. Rame selon la revendication 14, **caractérisé en ce que** les ensembles structurels d'extrémité de caisse porteur (12) et porté (14) possèdent des tunnels d'intercirculation (22, 106) permettant de passer de l'une des première et deuxième voitures (172, 174) à l'autre.

## Claims

1. Structural assembly (12) for the end of a railway car body of the type intended for being fastened to a longitudinal end of a railway car body (2) comprising an underframe (4), a roof (6) and side faces (8, 10) forming a tubular cell, to articulate the body (2) with a body of another adjacent car and transfer the load of the body (2) to a body support bogie common to this other car, comprising a bottom crosspiece (16) and an articulation element (24) on another structural assembly for the end of a body, fastened to said other adjacent car,
**characterised in that** the bottom crosspiece (16) has a central portion (34) and two side portions (36), the articulation element (24) being fastened to the central portion (34), and each side portion being adapted to rest on body suspension devices on said bogie.

2. Assembly according to claim 1, **characterised in that** the bottom crosspiece (16) is made at least partly of composite material.

3. Assembly according to claim 1 or 2, **characterised in that** the bottom crosspiece (16) is made all in one piece.

4. Assembly according to claim 1 or 2, **characterised in that** the bottom crosspiece (16) comprises a lower shell (42) and an upper shell (44), which are superimposed, giving the crosspiece a box-type structure.

5. Assembly according to any of the preceding claims, **characterised in that** the bottom crosspiece (16) comprises, above the articulation element (24), a cavity (40) for receiving a suspension crown (144) intended for being arranged vertically between the articulation element (24) and a corresponding articulation element (108) of said other structural assembly for the end of a body.

6. Assembly according to claim 5, **characterised in that** the articulation element (24) is at least partly received inside the bottom crosspiece (16).

7. Assembly according to claim 5 or 6, **characterised in that** it comprises at least one thrust longitudinal girder (18) fastened to the link element (24) or the bottom crosspiece (16) and intended to run between the articulation element (24) and a railway car body underframe (4), towards the inside of the car.

8. Assembly according to claim 7, **characterised in that** it comprises two separate longitudinal girders.

9. Assembly according to any of the preceding claims, **characterised in that** it comprises at least one element for coupling (26) with said other structural assembly for the end of a body of said other adjacent car.

10. Assembly according to any of the preceding claims, **characterised in that** it comprises an intercommunicating gangway (22) by means of which passengers can go through the structural assembly for the end of a body to reach an adjacent car.

11. Assembly according to claim 10, **characterised in that** the gangway (22) is made of composite material.

12. Assembly according to claim 11, **characterised in that** it comprises closure panels (84), situated laterally, on either side of the gangway (22) and intended to run transversely to close the longitudinal end of the body at least partially.

13. Railway car body comprising a body underframe (4), a roof (6) and two side faces (8, 10) each running between a longitudinal edge of the roof (6) and a longitudinal edge of the body underframe (4), **characterised in that** it comprises at least one structural assembly (12) for the end of a body according to any of the preceding claims, fastened to a longitudinal end of the body.

14. Car set comprising a first car and a second car, adjacent to each other, each having a body including a body underframe (4), a roof (6) and two side faces (8, 10) and a bogie common to the two cars, the first car (172) having a bearing assembly (12) for the end of a body, according to any of
claims 1 to 12, fastened to a longitudinal end of the first car's body and resting on suspension devices interposed between the bearing assembly (12) for the end of a body and the bogie, the second car (174) having a borne structural assembly (14) for the end of a body fastened to a longitudinal end of the second car's body, the borne structural assembly (14) for the end of a body being complementary to said bearing structural assembly (12) for the end of a body, resting on the bearing assembly (12) for the end of a body, and articulated with it.

15. Car set according to claim 14, **characterised in that** the bearing structural assembly (12) for the end of a body and borne structural assembly (14) for the end of a body have intercommunicating gangways (22, 106), making it possible to go from the first or second car (172, 174) to the other.

## Patentansprüche

1. Endstrukturanordnung (12) eines Wagenkastens eines Schienenfahrzeugs, des Typs, der vorgesehen ist, an einem Längsende eines Wagenkastens (2) eines Schienenfahrzeugs befestigt zu werden, der ein Chassis (4), ein Wagendach (6) und Seitenwände (8, 10) umfasst, die eine rohrförmige Zelle bilden, und um den Wagenkasten (2) mit einem Wagenkasten eines benachbarten Wagens gelenkig zu verbinden und die Last des Kastens auf ein Drehgestell zum Stützen des Kastens zu übertragen, das gemeinschaftlich mit dem anderen Wagen ist, eine untere Traverse (16) und ein Gelenkorgan (24) zum Anlenken an eine andere Endstrukturanordnung eines Kastens, die an dem anderen Wagen befestigt ist, aufweisend,
**dadurch gekennzeichnet, dass** die untere Traverse (16) ein Mittelteil (34) und zwei Seitenteile (36) besitzt, wobei das Gelenkorgan (24) an dem Mittelteil (34) befestigt ist und jedes Seitenteil angepasst ist, um in Auflage auf Aufhängungsvorrichtungen des Kastens auf dem Drehgestell zu kommen.

2. Anordnung nach Anspruch 1, **dadurch gekennzeichnet, dass** die untere Traverse (16) zumindest teilweise aus einem Verbundmaterial hergestellt ist.

3. Anordnung nach Anspruch 1 oder Anspruch 2, **dadurch gekennzeichnet, dass** die untere Traverse (16) aus einem einzigen Stück hergestellt ist.

4. Anordnung nach Anspruch 1 oder Anspruch 2, **dadurch gekennzeichnet, dass** die untere Traverse (16) eine untere Schale (42) und eine obere Schale (44) umfasst, die übereinander angeordnet sind und der Traverse eine Kastenstruktur geben.

5. Anordnung nach einem beliebigen der vorhergehenden Ansprüche, **dadurch gekennzeichnet, dass** die untere Traverse (16) über dem Gelenkorgan (24) eine Aufnahmevertiefung (40) für einen Aufhängungskranz (144) aufweist, der vorgesehen ist, vertikal zwischen dem Gelenkorgan (24) und einem korrespondierenden Gelenkorgan (108) der anderen Endstrukturanordnung eines Kastens angeordnet zu werden.

6. Anordnung nach Anspruch 5, **dadurch gekennzeichnet, dass** das Gelenkorgan (24) mindestens teilweise im Inneren der unteren Traverse (16) aufgenommen ist.

7. Anordnung nach Anspruch 5 oder Anspruch 6, **dadurch gekennzeichnet, dass** sie mindestens einen Schublängsträger (18) aufweist, der an dem Verbindungsorgan (24) oder der unteren Traverse (16) befestigt ist und vorgesehen ist, sich zwischen dem Gelenkorgan (24) und einem Chassis (4) eines Wagenkastens eines Schienenfahrzeugs zum Inneren des Fahrzeugs zu erstrecken.

8. Anordnung nach Anspruch 7, **dadurch gekennzeichnet, dass** sie zwei getrennte Längsträger umfasst.

9. Anordnung nach einem beliebigen der vorhergehenden Ansprüche, **dadurch gekennzeichnet, dass** sie mindestens ein Organ (26) zur Kupplung mit der anderen Endstrukturanordnung des Kastens des anderen benachbarten Wagens aufweist.

10. Anordnung nach einem beliebigen der vorhergehenden Ansprüche, **dadurch gekennzeichnet, dass** sie einen Durchgangstunnel (22) umfasst, der den Passagieren ermöglicht, durch die Endstrukturanordnung hindurchzugehen, um in einen benachbarten Wagen zu gelangen.

11. Anordnung nach Anspruch 10, **dadurch gekennzeichnet, dass** der Tunnel (22) aus Verbundmaterial hergestellt ist.

12. Anordnung nach Anspruch 11, **dadurch gekennzeichnet, dass** sie Abschlussschürzen (84) umfasst, die seitlich beidseitig des Tunnels (22) angeordnet sind und vorgesehen sind, sich quer zu erstrecken, um zumindest teilweise das Längsende des Kastens abzuschließen.

13. Wagenkasten eines Schienenfahrzeugs, ein Kastenchassis (4), ein Wagendach (6) und zwei Seitenwände (8, 10), die sich jeweils zwischen einem Rand des Dachs (6) und einem Längsrand des Kastenchassis (4) erstrecken, umfassend, **dadurch gekennzeichnet, dass** er mindestens eine Endstrukturanordnung (12) für einen Kasten nach einem beliebigen der vorhergehenden Ansprüche einschließt, die an einem Längsende des Kastens befestigt ist.

14. Wagengruppe, die einen ersten Wagen und einen benachbarten zweiten Wagen, die jeweils einen Kasten, der ein Kastenchassis (4), ein Wagendach (6) und zwei Seitenwände (8, 10) einschließt, besitzen und ein Drehgestell umfasst, das beiden Wagen gemeinsam ist, wobei der erste Wagen (172) eine tragende Endstrukturanordnung (12) eines Kastens nach einem beliebigen der Ansprüche 1 bis 12 besitzt, die an einem Längsende des Kastens des ersten Wagens und in Auflage auf Aufhängungsvorrichtungen, die zwischen der tragenden Endstrukturanordnung (12) eines Kastens und dem Drehgestell angeordnet sind, befestigt ist, wobei der zweite Wagen (174) eine getragene Endstrukturanordnung (14) eines Kastens besitzt, die an einem Längsende des Kastens des zweiten Wagens befestigt ist, wobei die getragene Endstrukturanordnung (14) eines Kasten komplementär zu der tragenden Endstrukturanordnung (12) eines Kastens und in Auflage auf der tragenden Endstrukturanordnung (12) eines Kastens ist und an dieser angelenkt ist.

15. Wagengruppe nach Anspruch 14, **dadurch gekennzeichnet, dass** die tragende und die getragene Kastenendstrukturanordnung (12, 14) Durchgangstunnel (22, 106) besitzen, die gestatten, von einem der ersten und zweiten Wagen (172, 174) in den jeweils anderen zu gelangen.
